# EUROPÄISCHE PATENTANMELDUNG

(11) **EP 1 731 027 A1**
(43) Veröffentlichungstag der Anmeldung: **13.12.2006**
(21) Anmeldenummer: 06011701.7
(22) Anmeldetag: 07.06.2006
(51) Int. Cl.: A01K 1/12

(54) **Verfahren zum Melken von Tieren**

(30) Priorität: 07.06.2005 DE 102005026239
(71) Anmelder: WestfaliaSurge GmbH, 59195 Bönen (DE)
(72) Erfinder: Kaever, Peter, Dr., 59302 Oelde (DE); Müller, Christian, 59302 Oelde-Sünninghausen (DE)
(74) Vertreter: Grünecker, Kinkeldey, Stockmair & Schwanhäusser Anwaltssozietät

(57) **Zusammenfassung**

Die vorliegende Erfindung betrifft ein Verfahren zum Melken von Tieren, bei dem mehrere Tiere in einem Melkstand zeitgleich gemolken werden, wobei die Verweilzeit eines einzelnen Tieres an dem Melkstand abhängig von der Verweilzeit der übrigen zeitgleich mit den zu melkenden Tiere ist und die Tiere beim Melken eine Futtermenge erhalten. Der Erfindung liegt das Problem zugrunde , ein an die praktischen Anforderungen angepasstes Verfahren zum Melken von Tieren bei gleichzeitiger Abgabe einer Futtermenge anzugeben. Zur Lösung dieses Problems wird mit der vorliegenden Erfindung ein Verfahren zum Melken bei gleichzeitiger Futterabgabe angegeben, welches zur Anwendung kommt, wenn die Verweilzeit eines einzelnen Tieres an dem Melkstand, abhängig von der Verweilzeit der übrigen zu melkenden Tiere an dem Melkstand ist, und bei dem erfindungsgemäß die dem einzelnen Tier gegebene Futtermenge in Abhängigkeit von den Verweilzeiten der zeitgleich gemolkenen Tiere in dem Melkstand bestimmt wird.

## Beschreibung

Die vorliegende Erfindung betrifft ein Verfahren zum Melken von Tieren, bei dem mehrere Tiere in einem Melkstand zeitgleich gemolken werden, wobei die Verweilzeit eines einzelnen Tieres an dem Melkstand abhängig von der Verweilzeit der übrigen zeitgleich mit den zu melkenden Tiere ist und die Tiere beim Melken eine Futtermenge erhalten.

In der modernen Melktechnik ist es durchaus üblich, den zu melkenden Tieren in dem Melkstand, d.h. beim Melken eine vorbestimmte Futtermenge zu geben. Diese Futtermenge soll die maximal tägliche Futtermenge des individuellen Tieres nicht übersteigen und regelmäßig wird diese Futtermenge darüber hinaus aufgrund der ohnehin für das Herdenmanagement erforderlichen Erkennung des jeweiligen individuellen Tieres tierindividuell verabreicht und/oder zusammengestellt. Mit der EP-1 246 096 wird ein Verfahren zum Herdenmanagement einer milchgebenden Herde vorgeschlagen, bei dem die bei einem Besuch des zu melkenden Tieres an dem Melkstand abgegebene Futtermenge unter Berücksichtigung der maximalen täglichen Futtermenge ermittelt und als Teilmenge dieser abgegeben wird. Die als Teilmenge abgegebene Futtermenge wird nach diesem Vorschlag für das zu melkende Tier aufgrund der Verweilzeit des Tieres in dem Melkstand bestimmt. Der Vorschlag nach der EP-1 246 096 will die dem zu melkenden Tier pro Melkgang vorgelegte Futtermenge auf die tatsächlich von dem Tier aufzunehmende Futtermenge beschränken und so wird diese Teilmenge als Produkt aus Fressgeschwindigkeit und der zu erwartenden Melkdauer berechnet. Letztere wiederum wird berechnet aus der individuellen und für das zu melkende Tier hinterlegten Wertzahl der Milchproduktion und der Milchabzugsrate, d.h. dem beim Melken abgezogenen Volumenstrom an ermolkener Milch.

Das aus der EP-1 246 096 bekannte Verfahren bestimmt dementsprechend die bei einem Melkdurchgang abzugebende Futtermenge aufgrund der beim Ermelken der Milch zur Verfügung stehenden Zeit, und zwar aufgrund der Milchproduktion des zu melkenden Tieres und aufgrund der aktuellen Milchabzugsgeschwindigkeit.

Aus der EP-0 724 382 ist ein Verfahren bekannt, bei dem das durch einen Roboter zu melkende Tier eine Futtermenge erhält, welche über die gesamte Fütterzeit in den Melkstand gestreckt verabreicht wird, und zwar mit dem Ziel, zur Entspannung des zu melkenden Tieres während des Melkens beizutragen. Auch bei diesem vorbekannten Verfahren wird die bei jedem Melkdurchgang zu verabreichende Futtermenge errechnet anhand der maximalen täglichen Futtermenge und der bekannten bzw. zu erwartenden Melkdurchgänge des entsprechenden Tieres basierend auf für die einzelnen Tiere gespeicherten Daten.

Die vorerwähnten Verfahren sind zwar für das vollautomatische Melken mit jeweils unabhängig von einem Tier zu begehenden Melkständen anwendbar. Sie haben sich indes in der Praxis nicht auf voller Breite durchsetzen können und so liegt der vorliegenden Erfindung das Problem zugrunde, ein an die praktischen Anforderungen angepasstes Verfahren zum Melken von Tieren bei gleichzeitiger Abgabe einer Futtermenge anzugeben.

Zur Lösung dieses Problems wird mit der vorliegenden Erfindung ein Verfahren zum Melken bei gleichzeitiger Futterabgabe angegeben, welches zur Anwendung kommt, wenn die Verweilzeit eines einzelnen Tieres an dem Melkstand, abhängig von der Verweilzeit der übrigen zu melkenden Tiere an dem Melkstand ist, und bei dem erfindungsgemäß die dem einzelnen Tier gegebene Futtermenge in Abhängigkeit von den Verweilzeiten der zeitgleich gemolkenen Tiere in dem Melkstand bestimmt wird.

Das erfindungsgemäße Verfahren eignet sich für alle Melkstände, in den zu melkende Tiere zeitgleich gemolken werden, wobei die Verweilzeit eines einzelnen Tieres zwangsläufig aufgrund von technischen Gegebenheiten oder aus Gründen der Herdenhaltung gewünscht von der Verweilzeit der übrigen zeitgleich zu melkenden Tiere abhängt. Aufgrund technischer Gegebenheiten ist eine solche Abhängigkeit beispielsweise an Reihenmelkständen gegeben, bei denen der Aufenthaltsbereich der zu melkenden Tiere gleichzeitig auch den Durchgang der zu melkenden Tiere durch den Melkstand bildet. Dies bedeutet, dass die in einer Reihe hintereinander angeordneten Melkplätze lediglich zeitgleich von zu melkenden Tieren belegt und von diesen wieder verlassen werden können. Aus Gründen der Herdentierhaltung kann eine solche Kopplung der Verweilzeit aber auch bei Tandemmelkständen gewünscht sein, die auf der dem Benutzer abgewandten Seite der Melkplätze einen Durchtreibegang haben, der einen permanenten Verkehr von zu melkenden Tieren zu den Melkplätzen und von den Melkplätzen weg grundsätzlich ermöglicht. Mitunter soll aber aus herdenpsychologischen Gründen die dadurch entstehende Unruhe vermieden werden und mehrere, gegebenenfalls alle zu melkenden Tiere sollen erst nach Beendigung der Melk- und Nachbearbeitungsphasen des letzten fertig werdenden Tieres zu entlassen. Nach dem erfindungsgemäßen Verfahren wird die dem einzelnen Tier während eines Melkdurchgangs gegebene Futtermenge in Abhängigkeit von den Verweilzeiten der zeitgleich gemolkenen Tiere in dem Melkstand bestimmt. Im Gegensatz zu den vorbekannten Verfahren bestimmt sich die Futtermenge nicht mehr allein nach dem Verhalten bzw. der Charakteristik des jeweils bezogenen Tieres, sondern wird anhand eines Gruppen- bzw. Untergruppenverhaltens festgelegt. Es kann dementsprechend bei dem erfindungsgemäßen Verfahren vorkommen, dass bei einigen Tieren der zeitgleich zu melkenden Tiere die Phasen des Melkvorganges einschließlich der Nachbehandlung bereits abgeschlossen sind, gleichwohl aber Futter auch an den Melkplatz dieses Tieres weiter geliefert wird, um die Zufriedenheit des fertig gemolkenen Tieres an dem Melkplatz zu erhöhen. Auch wird verhindert, dass einzelne Tiere vorzeitig entlassen werden, wodurch bei den noch im Melken befindlichen Tiere Unruhe hervorgerufen wird.

Mit der vorliegenden Erfindung wird ein Verfahren vorgeschlagen, bei dem nicht lediglich die dem einzelnen Tier beim Melken zu gebende Futtermenge individuell auf das spezielle Tier abgestimmt wird, sondern darüber hinaus diese Futtermenge mit Rücksicht auf die Gruppe der zeitgleich beim Melken befindlichen Tiere festgelegt wird. Insofern kommt das erfindungsgemäße Verfahren den herdenspezifischen Anforderungen, die regelmäßig an milchgebende Tiere gestellt werden, besser nach, als die aus dem Stand der Technik bekannten Verfahren.

Gemäß einer bevorzugten Weiterbildung des vorliegenden Verfahrens wird die Verweilzeit der zeitgleich gemolkenen Tiere a priori anhand von historischen Werten der Melkdauer der einzelnen Tiere bestimmt. Insofern kann aufgrund dieser gegebenenfalls auch vorläufigen Information zur definitiven Verweilzeit der einzelnen Tiere die abzugebende Futtermenge zumindest näherungsweise an die tatsächlichen Gegebenheiten beim Melken angepasst werden. Die historischen Werte können entweder aus vorher gemessenen Verweilzeiten früherer Melkdurchgänge der Tiere der zu melkenden Herde bestimmt worden sein. Alternativ können auch statistische Daten herangezogen werden, die für die Gattung der Tiere repräsentativ sind. Bei einer bevorzugten Weiterbildung des erfindungsgemäßen Verfahrens wird die Verweilzeit in Abhängigkeit von der Verweilzeit der zeitgleich gemolkenen Tiere bestimmt. Diese Bestimmung erfolgt vorzugsweise nachdem die zeitgleich zu melkenden Tiere beim Betreten des Melkstandes bzw. bei Erreichen ihres Melkplatzes innerhalb des Melkstandes durch an sich bekannte Identifizierungsmittel erkannt worden sind. Die den einzelnen Tieren zugeordneten historischen Verweilzeiten können dabei neben der Leistungscharakteristik der zu melkenden Tiere im Hinblick auf die Milchabgabe, in einem zentralen Speicher eines Herdenmanagement-Systems hinterlegt sein, der die entsprechenden Daten zur Ermittlung der Verweilzeiten der einzelnen zeitgleich zu melkenden Tiere ausgibt, um vorzugsweise die längste Verweilzeit der zu melkenden Tiere auszuwählen und diese zur Bestimmung der Futtermenge sämtlicher zeitgleich zu melkender Tiere zugrunde zu legen.

Gemäß einer weiteren bevorzugten Ausgestaltung der vorliegenden Erfindung wird die Verweilzeit der zeitgleich gemolkenen Tiere während des Melkens überprüft und dynamisch angepasst. Durch diese bevorzugte Verfahrensführung kann individuellen Störfaktoren Rechnung getragen werden. Störfaktoren können beispielsweise das Abtreten oder Fallenlassen der Melkzeuge beim Melken sein. Auch können Änderungen der Verweilzeit berücksichtigt werden, die durch das Tierverhalten begründet sind. Einflüsse, die sich auf die Verweilzeit der einzelnen Tiere beim Melken auswirken, können hierbei direkt erfasst und in die Berechnung und Dynamisierung der zu melkenden Tiere eingegeben werden. Zu diesen Messgrößen zählen insbesondere das Öffnen und Schließen von Gattern, die die zu melkenden Tiere in ihrer Position auf dem Melkstand halten und ferner Bewegungsinformationen zur Lage und Zustellgeschwindigkeit des Melkzeuges. Als Störgröße kann aber auch eine eventuelle Verzögerung bei der Bereitstellung der abzugebenden Futtermenge Eingang in die Berechnung der Verweilzeit finden, um so sicher zu stellen, dass die als erforderlich ermittelte Futtermenge auch tatsächlich während des entsprechenden Melkdurchganges abgegeben wird. Nach dem Grundprinzip der vorliegenden Erfindung werden solche Störungen bei einzelnen Positionen des Melkstandes erfasst und der Ermittlung der Verweilzeit sämtlicher zeitgleich gemolkener Tiere zugrunde gelegt. So kann beispielsweise auch ein unerwartet beschleunigter Ablauf bei demjenigen Tier, welches a priori die längste Verweilzeit hat, zu einer beschleunigten Abgabe der Futtermenge bei allen zeitgleich zu melkenden Tieren führen.

Gemäß einer weiteren bevorzugten Ausgestaltung wird die Futtermenge chargenweise mit Futtergaben und dazwischenliegenden Pausen dosiert und diese Dosierung an die dynamisch ermittelte Verweilzeit angepasst. Mit der Dosierung der Futtermenge in Einzelportionen kann die Fressgeschwindigkeit beeinflusst und die Menge an aufgenommenen Futter bei einem Melkdurchgang zuverlässig gesteuert werden. Die in eine Futterschale beim Melken abgegebene Futtermenge besteht üblicherweise aus verschiedenen Futtersorten. In der Regel wird hierbei Leistungsfutter gegeben. Eine weitere wichtige Gruppe von Futterstoffen sind Energieträger, wie beispielsweise Propylenglycol. In diesen Futtersorten sind auch flüssige Futtermittel vorgesehen, die zugegeben werden, um dem zu melkenden Tier in konzentrierter Form leicht aufzuschlüsselnde Energie zuzuführen. Weiter sind Zusatzstoffe, wie beispielsweise Mineralien, Spurenelemente, Impfstoffe, Medikamente, Salze oder Vitamine in fester oder flüssiger Form in dem Futtermittel enthalten. Insbesondere die letzte Gattung der Futterbestandteile kann individuell nach Erkennen eines bestimmten zu melkenden Tieres an der Melkposition kontrolliert dem Futter an dieser Melkposition zudosiert werden. Bei der bevorzugten Ausgestaltung der vorliegenden Erfindung wird nach einer ausgeworfenen Portion, d.h. einer Futtergabe eine Pause eingestellt, die so lang ist, dass die Futtergabe im Wesentlichen vollständig von dem Tier aufgenommen ist, d.h. die Futterschale leer gefressen ist, wenn eine neue Futtergabe erfolgt. Durch diese Verfahrensführung kann verhindert werden, dass eine größere Menge an zugeführtem Futtermittel bei ungenügender Abnahme durch das zu melkende Tier in der Futterschale verbleibt. Durch mengenmäßige Veränderung der Futtergabe kann nicht nur tierindividuell die Futtermenge, sondern auch die Fressgeschwindigkeit des einzelnen Tieres gesteuert werden. Maßgeblich für eine derartige Steuerung der Dosierung kann die Zugehörigkeit des zu melkenden Tieres zu einer Gruppe sein. Gruppenspezifische Merkmale können beispielsweise das Alter des Tieres, das Gewicht, die Größe oder aber die in vorherigen Melkdurchgängen ermittelte Fressgeschwindigkeit sein. Hierzu kann die Futterschale Sensoren aufweisen, die Auskunft über den Befüllungsgrad, gegebenenfalls den Gradienten des Gewichtsverlustes bei der Futteraufnahme geben. Mit Hilfe solcher Sensoren kann auch beispielsweise eine Steuerung der Futtermenge und insbesondere eine Steuerung der Dosierung aufgrund der Fressgeschwindigkeit erfolgen.

Vorzugsweise wird die gesamte Futtermenge als Abfolge von Futtergaben mit dazwischenliegenden Pausen dosiert. Das bedeutet, dass der Füttervorgang im wesentlichen aus einer Abfolge von Futtergaben mit Dosierpausen besteht, wobei diese Abfolge über die Verweilzeit der zu melkenden Tiere in dem Melkstand, d.h. im Verlauf des Melkens flexibel angepasst werden kann.

Die Fütterung der zeitgleich zu melkenden Tiere beginnt vorzugsweise zeitgleich oder bei den zuerst eingelassenen Tieren zuerst. Vorzugsweise erfolgt die erste Futtergabe für sämtliche Tiere bei einer dosierenden Zugabe der Futtermenge simultan, um Neid und dergleichen bei den zu melkenden Tieren zu unterdrücken und um sämtliche, zeitgleich zu melkenden Tiere bestmöglich ruhig und zufrieden zu stellen. Um Nervosität zum Ende der Verweilzeit zu vermeiden, wird gemäß einer weiteren bevorzugten Ausgestaltung der vorliegenden Erfindung vorgeschlagen, die Abgabe der Futtermenge an die zeitgleich zu melkenden Tiere so zu beenden, dass die Tiere im wesentlichen zeitgleich die Futteraufnahme beenden. Dies bedeutet, dass die letzte Futtergabe einer dosiert zugegebenen Futtermenge für alle zeitgleich zu melkenden Tiere zu einem vorbestimmten Zeitpunkt beendet wird. Im Hinblick auf eine möglichst einfache Verfahrensführung und -Steuerung, wird gemäß einer weiteren bevorzugten Ausgestaltung des erfindungsgemäßen Verfahrens vorgeschlagen, die Abgabe der Futtermenge zum Ende der Verweilzeit zeitgleich zu beenden. Bei dieser bevorzugten Ausgestaltung des Verfahrens, die insbesondere dadurch realisiert werden kann, dass die letzte Futtergabe bei einer dosierenden Abgabe der Futtermenge zeitgleich beendet wird, kann die aktuelle Fressgeschwindigkeit der in der Gruppe zusammengefassten Tiere außer Betracht bleiben.

Die Verweilzeit der zu melkenden Tiere in dem Melkstand setzt sich zusammen aus folgenden Phasen: Einlassen der Tiere, Vorbereiten der Tiere (Anrüsten, Vormelken, Dippen, Präparieren und dergleichen), Ansetzen, einschließlich Vorbereiten von Abtrennvorgängen und dergleichen, der eigentlichen Melkphase einschließlich der Phase des Nachmelkens, einer Phase zur Abnahme des Melkzeuges. Während der Verweilzeit der zu melkenden Tiere an dem Melkstand werden ferner eine Phase zur Nachbehandlung der Tiere, beispielsweise zum Dippen, zur Behandlung des Euters oder anderer Körperteile und zur Pflege der Tiere durchgeführt, eine Auslassphase schließt sich an, bei der eventuelle Ausgangstore von Gattern zu Abgrenzung einzelner Melkplätze geöffnet werden. Schließlich kann auch das Erkennen des ersten Tieres der nächsten Reihe nach dem Melken der Verweilzeit der vorherigen Gruppe von Tieren an dem Melkstand zugeschlagen werden. Erfindungsgemäß wird die Länge einzelner Phasen bestimmt und die Verweilzeit der zu melkenden Tiere aus der Summe bestimmter, insbesondere zeitkritischer Phasen, gegebenenfalls aus der Summe aller der vorerwähnten Phasen gebildet. Vorzugsweise werden für die Verweilzeiten in den einzelnen Phasen, d.h. den so genannten Phasenverweilzeiten diesen zunächst historische oder geschätzte Zeitwerte zugeordnet und die zur Abgabe der Futtermenge zur Verfügung stehende Verweilzeit durch Summieren der relevanten Phasenverweilzeiten ermittelt. Mit der so ermittelten Verweilzeit wird die in dem Melkdurchgang abzugebende Futtermenge zunächst abgeschätzt. Zeitkritische Phasen sind insbesondere die Melkphase, die Phase zum Vorbereiten der Tiere, insbesondere die Anrüstphase sowie die Nachbehandlungsphase. Mit guter Zuverlässigkeit kann die Futtermenge aufgrund der Verweilzeit bereits dadurch bestimmt werden, dass lediglich diese drei wesentlichen Phasen ermittelt und zur Bestimmung der Verweilzeit herangezogen werden. Die Phasenverweilzeiten können a priori aus historischen Werten, insbesondere aus Werten des Herdenmanagements ausgelesen werden. Zusätzlich ist es möglich, für einen bestimmten Benutzer oder für bestimmte Benutzergruppen selektierte bzw. korrigierte Erfahrungswerte heranzuziehen, durch welche eine insbesondere durch die Geschicklichkeit und Erfahrung des jeweiligen Benutzers verursachte Verlängerung oder Verzögerung der einzelnen Phasenverweilzeiten berücksichtigt werden. Diese als Korrekturwerte bezeichneten benutzerspezifischen oder benutzergruppenspezifischen Werte werden vorzugsweise aufgrund der ermittelten Streubreite einzelner Phasenverweilzeiten bestimmt, wobei es dem Benutzer möglich ist, ermittelte Phasenverweilzeiten bestimmten Geschicklichkeits- und Erfahrungsklassen zuzuweisen, wie beispielsweise "schnell", "mittel" und "langsam", wobei der Benutzer jeweils nach Wahl seine Erfahrungs- und Geschicklichkeitsklassen eingeben und somit die anzuwendenden Korrekturwerte bestimmen kann. Relevant sind hierbei insbesondere Phasen, deren Dauer von der Geschwindigkeit des Benutzers abhängt. Die benutzerspezifischen und benutzergruppenspezifischen Korrekturwerte sind von besonderer Relevanz für die Abschätzung der Anrüstzeit und der Nachbehandlungszeit. Die benutzerspezifischen Korrekturwerte werden vorzugsweise durch während des Melkens ermittelte benutzerspezifische Korrekturwerte überschrieben, um eventuellen Lernerfolgen des Benutzers oder eventuellen Ermüdungserscheinungen des Benutzers Rechnung zu tragen, d.h. die Korrekturwerte dynamisch an die jeweilige Leistungsfähigkeit des Benutzers anzupassen. Hierbei werden zunächst historische Werte, gegebenenfalls mit benutzerspezifischer Korrektur verwendet und beim Ablauf der verschiedenen Melkphasen diese zunächst abgeschätzten und/oder hinterlegten Phasenverweilzeiten durch die konkret bemessenen Phasenverweilzeiten ersetzt. Je mehr einzelne Phasen dementsprechend konkret durchlaufen und hinsichtlich ihrer Verweilzeit für die einzelnen zu melkenden Tiere bestimmt worden sind, desto zuverlässiger ist die für die Futtermenge aller zeitgleich gemolkener Tiere relevante maximale Verweilzeit, welche durch eines dieser Tiere vorgegeben wird, bestimmt werden.

Gemäß einer bevorzugten Weiterbildung der vorliegenden Erfindung werden die zeitgleich zu melkenden Tiere beim Betreten des Melkstandes erkannt und die Verweilzeit aufgrund der historischen Werte zu den Phasenverweilzeiten der erkannten Tiere abgeschätzt. Das Merkmal "beim Betreten des Melkstandes" bedeutet hier, dass die Erkennung der zu melkenden Tiere entweder am Eingang des Melkstandes erfolgt, oder aber bei Erreichen eines Melkplatzes innerhalb des Melkstandes.

Soweit gemäß der vorstehend bereits beschriebenen Ausführungsform eine Dosierung der Futtermenge mit Futtergaben und dazwischenliegenden Futterpausen erfolgt, wird diese Dosierung für jedes zu melkende Tier phasenindividuell eingestellt. Mit dieser Vorgehensweise kann den neusten Erkenntnissen zur tatsächlich zu erwartenden maximalen Verweilzeit aufgrund der bis dahin gemessenen Phasenverweilzeit durch Anpassung der Dosierfrequenz und/oder Dosiermenge zu Beginn jeder weiteren Phase Rechnung getragen werden. Bei dieser phasenindividuellen Einstellung der Dosierung werden vorzugsweise auch tierindividuelle Anforderungen an die Dosierung in jeder der Phasen berücksichtigt.

Das erfindungsgemäße Verfahren wird vorzugsweise mit dem Ziel durchgeführt, dem zu melkenden Tier eine tierspezifische kalkulierte Futtermenge zuzuführen und dabei die Aufnahmefähigkeit des Tieres und die verfügbare Zeit, d.h. die Verweilzeit in dem Melkstand zu berücksichtigen. Diese wesentlichen Rahmenbedingungen können beispielsweise in den jeweiligen, vorstehend vorgestellten Phase berücksichtigt werden, um die aktuelle Futterabgabe in jeder der einzelnen Phasen im Hinblick auf ein bestmögliches Ergebnis zu beeinflussen. Die Konkretisierung von "weichen", d.h. historischen oder geschätzten Phasenverweilzeiten zu "harten", d.h. tatsächlich ermittelten Phasenverweilzeiten zur Bestimmung der Verweilzeit und insbesondere der verbleibenden Verweilzeit, läuft vorzugsweise wie folgt ab: Während des Einlassens der Tiere (Einlassphase) setzt sich die geschätzte Verweilzeit aus Vergangenheitswerten für das Einlassen und die Vorbereitungsphase, dem erwarteten Wert der Melkdauer der Tiere und den Vergangenheitswerten für die Nachbehandlungsphase, gegebenenfalls bis zum Auslassen der Tiere zusammen. Je nach Anwendung kann sich die Verweilzeit bis zur Erkennung des ersten Tieres der nächsten Reihe erstrecken. Der erwartete Wert der Verweilzeit, die für die Bestimmung der Futtermenge herangezogen wird, ergibt sich aus den bereits am Melkstand erkannten Tieren und/oder gruppen- bzw. herdenspezifischen Mittel- oder Maximalwerten der Verweilzeit.

Während der Vorbereitung der Tiere, d.h. beim Anrüsten, Vormelken, Dippen, Präparieren und dergleichen setzt sich die geschätzte verbleibende Verweilzeit aus Vergangenheitswerten für die Vorbereitungsphase, dem Maximalwert der Melkdauer der Tiere dieser Gruppe und den Vergangenheitswerten für die Nachbehandlungsphase, gegebenenfalls bis zum Auslassen der Tiere zusammen. Je nach Anwendung kann sich die Verweilzeit bis zur Erkennung des ersten Tieres der nächsten Gruppe erstrecken. Konkretisiert wurde die Verweilzeit bereits durch die gemessene Zeit für das Einlassen der Tiere. Da die Tiere zu dieser Zeit noch nicht an ihrem Melkplatz angekommen sind, kann diese Phasenverweilzeit auch bei der Bestimmung der für die Futtermenge maßgeblichen Verweilzeit außer Betracht bleiben.

Beim Ansetzen eines Tieres ist eine genauere Schätzung der Verweilzeit anhand der realen Ansetzzeitpunkte möglich. Zur Schätzung der Verweilzeit werden für jeden Melkplatz anhand der Ansetzzeitpunkte und der zu erwartenden Melkdauer des dort stehenden Tieres die Endzeitpunkte des Melkens pro Melkplatz berechnet. Zusammen mit dem gegebenenfalls tierindividuellen Wert für die Nachbehandlung kann daraus der Wert der verbleibenden Verweildauer pro Melkplatz berechnet werden. Der so ermittelte Maximalwert für die Gruppe der zeitgleich zu melkenden Tiere wird als restliche Verweildauer der Tiergruppe herangezogen. Auch hier kann sich je nach Anwendung die zur Bestimmung der Futtermenge relevante Verweilzeit bis zur Erkennung des ersten Tieres der nächsten Gruppe erstrecken.

Da die Melkphase üblicherweise den größten Beitrag zu der für die Fütterung zur Verfügung stehenden Verweilzeit leistet, wird die Phasenverweilzeit für die Melkphase vorzugsweise aufgrund der aktuell gemessenen Milchabzugsrate dynamisch während der Melkphase angepasst.

In der Nachbehandlungsphase der Tiere (Dippen, Behandeln, Pflegen) kann die verbleibende Verweildauer zunächst aus Vergangenheitswerten für diese Phasenverweilzeit bestimmt werden. Relevant sind insbesondere Vergangenheitswerte für die Zeitspanne vom Zeitpunkt der Abnahme des letzten Melkzeuges einer Reihe an einem Melkstand bis zum Öffnen des Ausgangstores zum Auslassen der Tiere bzw. je nach Anwendung bis zur Erkennung des ersten Tieres der nächsten Gruppe. Des weiteren können optional auch tierindividuelle Nachbehandlungszeiten aus dem Herdenmanagement-System in die Schätzung einfließen.

Bei dem erfindungsgemäßen Verfahren wird vorzugsweise die verfügbare Zeit zur Nahrungsaufnahme pro Melkplatz ermittelt, wobei mit fortschreitender Zeit die Schätzwerte durch reale Werte ersetzt werden. Aus dem Maximalwert über die Plätze einer Reihe zeitgleich zu melkender Tiere wird die Verweilzeit der Reihe und damit der Endpunkt der zur Abgabe der Futtermenge zur Verfügung stehenden Zeit, d.h. der Fütterzeit ermittelt. Weitere Einflussfaktoren auf die maximal zuteilbaren Portionen innerhalb der verfügbaren Fütterzeit lassen sich insbesondere mit verschiedenen Sensoren erfassen. Hierzu gehören Sensoren, welche ein Leerfressen der Futterschale detektieren und entsprechend die Zudosierung steuern. Weitere Sensoren können beispielsweise das Abtreten oder Fallenlassen der Melkzeuge erfassen und auch bei einem generellen Wiederansetzen die sich daraus ändemde Verweilzeit der zeitgleich zu melkenden Tiere an dem Melkstand neu kalkulieren. Die insgesamt dosierte Futtermenge kann an die verfügbare Zeit zur Futteraufnahme dynamisch angepasst werden. Dies geschieht mit dem Ziel, die kalkulierte Futtermenge für ein bestimmtes zu melkendes Tier so zuzugeben, dass diese auch von dem entsprechenden Tier aufgenommen werden kann. Ein weiterer wesentlicher Aspekt ist die Verbuchung, d.h. Registrierung der tatsächlich aufgenommenen Futtermenge pro Tier in dem Herdenmanagement zur Kontrolle von Überfütterung, welche insbesondere im Hinblick auf einen schonenden Umgang der Ressource "Leistungsfutter" angezeigt ist.

Weiter wird vorgeschlagen, die Zusammensetzung der Futtersorten je nach Phase der Verweilzeit zu ändern. Beispielsweise kann in der ersten Phase sehr schmackhaftes Lockfutter gegeben werden, während am Ende hin weniger schmackhaftes Leistungsfutter gegeben wird.

Das erfindungsgemäße Verfahren wird vorzugsweise mit Rücksicht auf die maximale tägliche Futtermenge für das jeweilige Tier, welche in dem Herdenmanagement-System hinterlegt ist, durchgeführt. Hierzu wird in dem Verfahren vorzugsweise aufgrund der Futtergeschwindigkeit des zu melkenden Tieres eine tierspezifische kalkulierte Futtermenge für einen Melkstandaufenthalt berechnet und die bei einem Melkstandaufenthalt an das zu melkende Tier abzugebende Futtermenge unter Berücksichtigung einer maximal täglichen Futtermenge und der kalkulierten Futtermenge ermittelt. Durch diese bevorzugte Ausgestaltung des erfindungsgemäßen Verfahrens wird sichergestellt, dass die tatsächlich abgegebene Futtermenge die kalkulierte Futtermenge nicht übersteigt, d.h. die zur Futteraufnahme zur Verfügung stehende Verweilzeit ausreicht, um die gesamte, während eines Melkdurchgang abgegebene Futtermenge aufzunehmen. Darüber hinaus wird die abgegebene Futtermenge limitiert durch den im Herdenmanagement-System hinterlegen Wert für die maximale tägliche Futtermenge des entsprechenden Tieres. Bei einer weiteren bevorzugten Ausgestaltung wird beim dosierten Abgeben der Futtermenge eine dosierbare Menge ermittelt, die durch die Fressgeschwindigkeit, die im Herdenmanagement-System hinterlegte tierspezifische Dosierung und die Verweilzeit des zu melkenden Tieres begrenzt ist. Bei dieser bevorzugten Ausgestaltung wird die dosierte Futtermenge in jedem Fall unter Berücksichtigung der tierspezifischen Werte für die Fressgeschwindigkeit einerseits und die Dosierung andererseits eingestellt. Aufgrund der Berücksichtigung der Verweilzeit wird verhindert, dass zum Ende der Fütterzeit Futterreste in der Futterschale nach dem Austreten des entsprechenden Tieres verbleiben. Die tatsächliche Futtermenge wird hierzu auf dem kleinsten Wert aus dosierbarer Menge, maximaler täglicher Futtermenge und kalkulierter Futtermenge festgelegt.

## Patentansprüche

1. Verfahren zum Melken von Tieren, bei dem mehrere Tiere in einem Melkstand zeitgleich gemolken werden, wobei die Verweilzeit eines einzelnen Tieres an dem Melkstand abhängig von der Verweilzeit der übrigen zeitgleich mit dem zu melkenden Tier zu melkenden Tiere ist und die Tiere beim Melken eine Futtermenge erhalten,
**dadurch gekennzeichnet,**
**dass** die dem einzelnen Tier gegebene Futtermenge in Abhängigkeit von den Verweilzeiten der zeitgleich gemolkenen Tiere in dem Melkstand bestimmt wird.

2. Verfahren nach Anspruch 1, **dadurch gekennzeichnet, dass** die Verweilzeit der zeitgleich gemolkenen Tiere a priori anhand von historischen Werten der Verweilzeit der einzelnen Tiere bestimmt wird.

3. Verfahren nach Anspruch 2, **dadurch gekennzeichnet, dass** die Verweilzeit in Abhängigkeit von der Verweilzeit aller Tiere der Herde bestimmt wird.

4. Verfahren nach Anspruch 2 oder 3, **dadurch gekennzeichnet, dass** die Verweilzeit in Abhängigkeit von der Verweilzeit der zeitgleich gemolkenen Tiere bestimmt wird.

5. Verfahren nach einem der vorherigen Ansprüche, **dadurch gekennzeichnet, dass** die Verweilzeit der zeitgleich gemolkenen Tiere während des Melkens überprüft und dynamisch angepasst wird.

6. Verfahren nach einem der vorherigen Ansprüche, **dadurch gekennzeichnet, dass** die gegebene Futtermenge beim Melken an die dynamisch ermittelte Verweilzeit des zu melkenden Tieres angepasst wird.

7. Verfahren nach einem der vorherigen Ansprüche, **dadurch gekennzeichnet, dass** die längste Verweilzeit der zeitgleich zu melkenden Tiere als zur Bestimmung der Fütterzeit für alle der zeitgleich zu melkenden Tiere herangezogen wird.

8. Verfahren nach einem der vorherigen Ansprüche, **dadurch gekennzeichnet, dass** die Futtermenge chargenweise mit Futtergaben und dazwischenliegenden Pausen dosiert wird und dass diese Dosierung an die dynamisch ermittelte Verweilzeit angepasst wird.

9. Verfahren nach Anspruch 8, **dadurch gekennzeichnet, dass** die Gesamtfuttermenge als Abfolge von Futtergaben und dazwischenliegenden Pausen dosiert wird.

10. Verfahren nach Anspruch 8 oder 9, **dadurch gekennzeichnet, dass** die Dosierung für das zu melkende Tier individuell eingestellt wird.

11. Verfahren nach Anspruch 10, **dadurch gekennzeichnet, dass** die Dosierung aufgrund der Zugehörigkeit des zu melkenden Tieres zu einer Gruppe anhand einer der Gruppe zugewiesenen Dosiereinstellung erfolgt.

12. Verfahren nach einem der vorherigen Ansprüche, **dadurch gekennzeichnet, dass** die Futtermenge aufgrund der Fressgeschwindigkeit des zu melkenden Tieres eingestellt wird.

13. Verfahren nach einem der Ansprüche 8 bis 12, **dadurch gekennzeichnet, dass** die Pause so eingestellt wird, dass eine erneute Futtergabe erst erfolgt, nachdem die vorherige Futtergabe im wesentlichen von dem Tier aufgenommen ist.

14. Verfahren nach einem der vorherigen Ansprüche, **dadurch gekennzeichnet, dass** die Abgabe der Futtermenge an die zeitgleich zu melkenden Tiere im wesentlichen zeitgleich beginnt.

15. Verfahren nach einem der vorherigen Ansprüche, **dadurch gekennzeichnet, dass** die Abgabe der Futtermenge an die zeitgleich zu melkenden Tiere so beendet wird, dass die Tiere im wesentlichen zeitgleich die Futteraufnahme beenden.

16. Verfahren nach Anspruch 15, **dadurch gekennzeichnet, dass** die Abgabe der Futtermenge der zeitgleich zu melkenden Tiere zeitgleich beendet wird.

17. Verfahren nach einem der vorherigen Ansprüche, bei dem die zu melkenden Tiere bei einem Melkdurchgang folgende Phasen durchlaufen: Einlassen der Tiere, Vorbereiten der Tiere, Ansetzen, Melkphase, einschließlich Nachmelken, Abnahme, Nachbehandlung der Tiere, Auslassen der Tiere und Anwesenheit auf dem Melkstand während Erkennen des ersten Tieres der nächsten Gruppe von zu melkenden Tieren, **dadurch gekennzeichnet, dass** die Länge einzelner Phasen zur Ermittlung der Verweilzeit bestimmt wird.

18. Verfahren nach Anspruch 17, **dadurch gekennzeichnet, dass** die Verweilzeit zunächst durch historische und/oder geschätzte Phasenverweilzeiten bestimmt wird und dass die Futtermenge aufgrund der so bestimmten Verweilzeit des Tieres abgeschätzt wird.

19. Verfahren nach Anspruch 17 oder 18, **dadurch gekennzeichnet, dass** die zeitgleich zu melkenden Tiere beim Betreten des Melkstandes erkannt und die Verweilzeit aufgrund von historischen Werten zu den Phasenverweilzeiten der erkannten Tiere abgeschätzt wird.

20. Verfahren nach einem der Ansprüche 17 bis 19, soweit von Anspruch 8 abhängig, **dadurch gekennzeichnet, dass** die Dosierung für das zu melkende Tier phasenindividuell eingestellt wird.

21. Verfahren nach einem der Ansprüche 17 bis 20, **dadurch gekennzeichnet, dass** beim Durchlaufen der Phasen einzelne Phasenzeiten durch konkret gemessene Phasenverweilzeiten ersetzt werden.

22. Verfahren nach einem der Ansprüche 17 bis 21, **dadurch gekennzeichnet, dass** zumindest die Phasenverweilzeit in Phasen, in denen der Benutzer aktiv wird, anhand von hinterlegten benutzerspezifischen oder benutzergruppenspezifischen Korrekturwerten bestimmt wird.

23. Verfahren nach Anspruch 22, **dadurch gekennzeichnet, dass** die benutzerspezifischen Korrekturwerte durch während des Melkens ermittelte benutzerspezifische Korrekturwerte überschrieben werden.

24. Verfahren nach einem der Ansprüche 17 bis 23, **dadurch gekennzeichnet, dass** in der Melkphase die Phasenverweilzeit aufgrund der aktuell gemessenen Milchabzugsrate des Tieres angepasst wird.

25. Verfahren nach einem der vorherigen Ansprüche, **dadurch gekennzeichnet, dass** aufgrund der Verweilzeit anhand der Futtergeschwindigkeit des zu melkenden Tieres eine tierspezifische kalkulierte Menge für einen Melkstandaufenthalt berechnet wird und dass die bei einem Melkstandaufenthalt an das zu melkende Tier abgegebene Futtermenge unter Berücksichtigung einer maximalen täglichen Futtermenge und der kalkulierten Futtermenge ermittelt wird.

26. Verfahren nach Anspruch 25, soweit von Anspruch 10 und 12 abhängig, **dadurch gekennzeichnet, dass** eine durch die Fressgeschwindigkeit, die tierspezifische Dosierung und die Verweilzeit begrenzte dosierbare Menge ermittelt wird.

27. Verfahren nach Anspruch 26, **dadurch gekennzeichnet, dass** die tägliche Futtermenge auf den kleinsten Wert aus dosierbarer Menge, maximal täglicher Futtergabe und kalkulierter Futtermenge festgelegt wird.
